(19) Europäisches Patentamt
European Patent Office
Office européen des brevets

(11) **EP 3 010 305 B1**

(12) **EUROPEAN PATENT SPECIFICATION**

(45) Date of publication and mention
of the grant of the patent:
**29.05.2019 Bulletin 2019/22**

(51) Int Cl.:
**H04W 84/12** *(2009.01)*    **H04W 92/02** *(2009.01)*
**H04W 40/24** *(2009.01)*    **H04W 84/18** *(2009.01)*

(21) Application number: **15189229.6**

(22) Date of filing: **09.10.2015**

(54) **METHOD FOR FACILITATING COMMUNICATION BETWEEN NODES BELONGING TO DIFFERENT WIRELESS NETWORKS**

VERFAHREN ZUR ERMÖGLICHUNG DER KOMMUNIKATION ZWISCHEN KNOTEN, DIE ZU VERSCHIEDENEN DRAHTLOSEN NETZWERKEN GEHÖREN

PROCÉDÉ POUR FACILITER LA COMMUNICATION ENTRE DES NOEUDS APPARTENANT À DES RÉSEAUX SANS FIL DIFFÉRENTS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.10.2014 GB 201418085**

(43) Date of publication of application:
**20.04.2016 Bulletin 2016/16**

(73) Proprietor: **Thales Holdings UK Plc
Reading, Berkshire RG2 6GF (GB)**

(72) Inventor: **Asgari, Abolghasem
Reading, Berkshire RG2 0SB (GB)**

(74) Representative: **Round, Edward Mark
Marks & Clerk LLP
15 Fetter Lane
London EC4A 1BW (GB)**

(56) References cited:
**EP-A1- 2 552 151    US-B1- 6 304 556**

**Description**

<u>FIELD</u>

Embodiments described herein relate generally to methods and systems for facilitating communication between nodes belonging to different wireless networks.

<u>BACKGROUND</u>

Wireless networks enable groups of nodes (users) to communicate when they are within direct radio range of one another or over somewhat longer ranges by multi-hopping through other nodes. Wireless ad-hoc networks are a particular, decentralized type of wireless network. They are referred to as "ad-hoc" because they do not rely on pre-existing infrastructure, such as routers in wired networks or access points in managed (infrastructure) wireless networks. Instead, each node participates in routing by forwarding data for other nodes, so the determination of which nodes forward data is made dynamically on the basis of network connectivity.

An issue encountered with ad hoc networks is the mobility of the nodes, which can lead to frequent and unpredictable topology changes in the network(s). For example, different ad-hoc networks may merge together to form a single network, or an individual ad-hoc network may be partitioned into two or more such networks; typically, such partitioning occurs when users become disconnected from other users within the group through physical barriers and distance. A further challenge to mobile ad hoc networks is the resolution of duplicate assigned addresses when two or more partitions merge together.

It follows that it is desirable to provide ways of managing connectivity between wireless ad-hoc networks.

US 6 304 556 B1 discloses routing and mobility management protocols for ad-hoc networks. EP 2 552 151 A1 discloses a method and system for centralised control of mobile station associations, routing and rate control in wireless networks.

<u>SUMMARY</u>

The invention is defined in the appended set of claims.

BRIEF DESCRIPTION OF FIGURES

Embodiments of the invention will now be described by way of example with reference to the accompanying drawings in which:

Figure 1 shows a schematic of a network architecture for use in implementing a method in accordance with an embodiment described herein;

Figure 2 shows a schematic of Cloud-hosted Functions that interact with Gateway Functions hosted on a network node in an embodiment described herein;

Figure 3 shows a schematic of a functional architecture for use in implementing a method in accordance with an embodiment described herein;

Figure 4 shows examples of ad-hoc networks having a network depth of 3;

Figure 5 shows an example in which the assigned address of a node in a first ad-hoc network is altered in order to avoid duplication with a node in a second ad-hoc network, in accordance with an embodiment described herein;

Figure 6 shows an example in which the address of a node in a first ad-hoc network is altered in order to avoid duplication with a node in a second ad-hoc network, in accordance with another embodiment described herein;

Figure 7 shows an example in which the address of a node in a first ad-hoc network is altered in order to avoid duplication with a node in a second ad-hoc network, in accordance with another embodiment described herein;

Figure 8 shows an example in which two nodes present in the same ad-hoc network each receive neighbourhood information messages from one another and are able to identify each other as belonging to the same ad-hoc network;

Figure 9 shows an example of two ad-hoc networks having the same topology and node addresses as one another, whereby it is not possible to distinguish which one of the two networks a particular neighbourhood information message originates;

Figure 10 shows an example of how the number of different topologies a network may have scales with the number of nodes in the network;

Figure 11 shows an example of how the probability that two ad-hoc networks having the same topology will form simultaneously varies with the number of nodes in those networks;

Figure 12 shows an example of bridging ad-hoc networks belonging to different missions, in accordance with an embodiment described herein.

Figure 13 shows an example of an algorithm for implementing a method according to an embodiment described herein;

Figure 14 shows an example of how a node in a first ad-hoc network may be selected to act as a gateway for communicating with nodes in other ad-hoc networks by considering the connectivity of respective nodes within the first ad-hoc network;

Figure 15 shows examples of how voice / data handling may be implemented following the merging of two ad-hoc networks, according to an embodiment described herein;

Figure 16 shows an example of a wireless communication device for putting an embodiment described herein into effect; and

Figure 17 shows an example of a cloud based server device for putting an embodiment described herein into effect.

## DETAILED DESCRIPTION

An embodiment provides a method for establishing communication between a first node in a first wireless network and nodes of another wireless network, the method comprising:

providing, at the first node, an interface for interfacing with an external network facility, the external network facility comprising a topology discovery module;
submitting a neighbourhood information message from the first node to the topology discovery module, wherein the neighbourhood information message provides an indication of nodes in the first wireless network with which the first node is currently able to communicate, the topology discovery module being configured to compute the topology of networks to which respective nodes belong based on neighbourhood information messages received by the topology discovery module from those nodes;
receiving at the first node, information sent from the external network facility for setting up a communication pathway between the first node and nodes of a second wireless network, the second wireless network being identified by the topology discovery module as having a different network topology from the first wireless network.

Another embodiment provides a method for facilitating communication between nodes belonging to different wireless networks, the method comprising:

i) receiving neighbourhood information messages sent from respective network nodes, wherein each received neighbourhood information message provides an indication of other nodes with which the node that sent the message is currently able to communicate;
ii) for each node from which a neighbourhood message is received, using the received neighbourhood messages to compute the topology of a network to which that node belongs;
iii) determining, based on the computed network topologies, whether respective ones of the nodes belong to separate networks from one another;
wherein in the event that it is determined that respective ones of the nodes belong to separate networks, the method further comprises:
iv) identifying within each one of the separate networks a node to serve as a gateway node for bridging communication between the separate networks; and

v) providing a pathway through an external network which the gateway nodes can communicate with one another.

Another embodiment provides a communication device operable to act as a node in a first wireless network, the communication device comprising:

a topology discovery facility interface module operable to:

establish an interface for interfacing with an externally provided topology discovery facility,
submit a neighbourhood information message to the topology discovery facility, wherein the neighbourhood information message provides an indication of the other nodes in the first network with which the communication device is currently able to communicate, the topology discovery module being configured to compute the topology of networks to which respective nodes belong based on neighbourhood information messages received by the topology discovery module from those nodes;
receive an indication of a second communication device identified by the topology discovery module as being one with which the communication device is currently unable to communicate, the second communication device being identified by the topology discovery facility as belonging to a network having a different network topology from the first wireless network; and
receive information for setting up a communication pathway between the communication device and the second communication device.

Embodiments described herein seek to identify and provide on-demand connectivity for partitioned/disjoint ad-hoc networks. In comparison to conventional methods of bridging networks, the embodiments described herein do not rely on any specific addressing scheme or routing protocol but detect partitioning with the help of an external system, utilising information exchanged between neighbouring nodes in order to bridge the networks automatically. The external system may, for example, comprise an external connectivity network, and a cloud infrastructure, with cloud functions hosted in platform/s at an operation centre(s).

The described embodiments work at the control and management layers irrespective of the specific networking technology connecting partitioned/disjoint ad-hoc networks. By doing so, it is possible to place the required functions on the external system making it possible to manage and offer connectivity services at large scale.

In addition to extending reachability of ad-hoc networks, embodiments described herein can also provide means for detecting duplicate addresses between ad-hoc networks, specifying the gateway functionality and using a reliable Publish/Subscribe (Pub/Sub) model in order to have a unified approach for handling both control and data plane information exchanged between the external system and ad-hoc network nodes. Embodiments described herein can also provide means for multiplexing multiple missions using an external network by addressing networking issues of mission-oriented networks with the proposed functional architecture being tailored to the specifics of these ad-hoc networks. A mission-oriented network can be understood to be an ad-hoc network having dynamic connectivity and network mobility targeted for a specific mission where the network may be partitioned or merged at time of operation.

Such networks may be intended for public safety, disaster relief missions, law enforcement or military operations, for example.

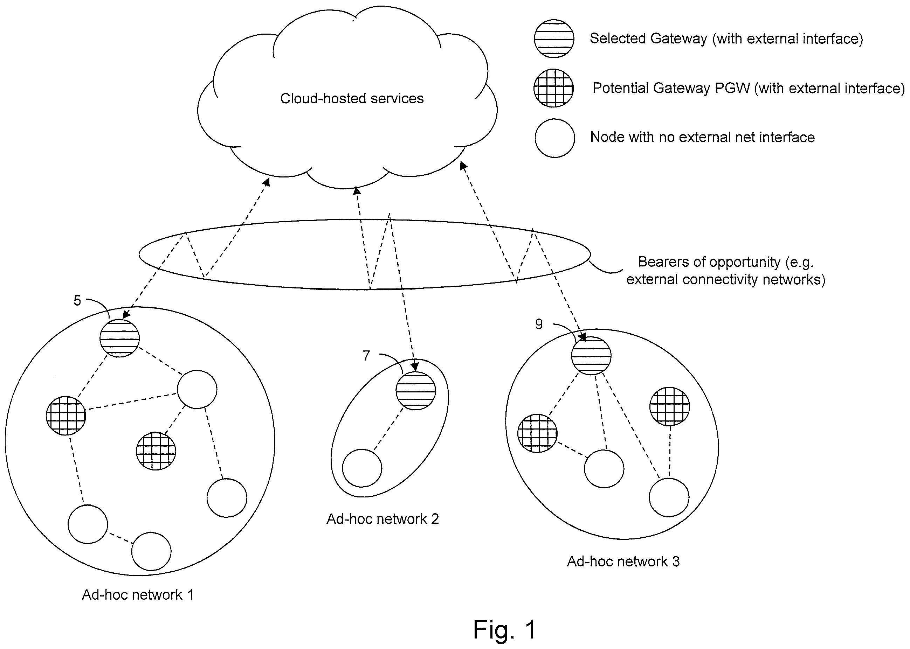

Figure 1 shows an example of a group of disjoint ad-hoc networks 1, 2, 3 in which each ad-hoc network comprises a respective group of nodes capable of relaying data wirelessly between them. In the context of the present application, the term "node" will be understood to refer to a communication device having capability of transmitting and / or receiving data wirelessly between other such devices. The nodes may, for example, comprise PST (Personal Secure Terminal) nodes.

The ad-hoc networks 1, 2, 3 are disjoint in the sense that the nodes in one network are not capable of relaying data directly to nodes in another network. For example, the nodes in ad-hoc network 1 are unable to communicate directly with nodes in the second ad-hoc network 2. Similarly, nodes in the second ad-hoc network are unable to relay data directly to nodes in the third ad-hoc network 3. It is possible, for example, that each ad-hoc network is located outside the communication range of the other two networks.

In embodiments described herein, the ad-hoc networks 1, 2, 3 can be bridged by making use of opportunistic communications bearers e.g. 3G/Wi-Fi to forge connections between them. Referring still to Figure 1, the external connectivity network(s) may utilise centralised bridging functions hosted in a cloud infrastructure, to connect ad-hoc network nodes/users located in the respective ad-hoc networks. Here, selected nodes 5, 7, 9 in the respective ad-hoc networks act as gateways to the public/private external network and subsequently to the cloud for relaying control messages or voice/data among ad-hoc networks. In practice, any available public/private external network can be used to enable on demand long-range connectivity between the ad-hoc networks by utilising a number of networking and management functions hosted in the cloud and providing extended node-to-node voice/data communication.

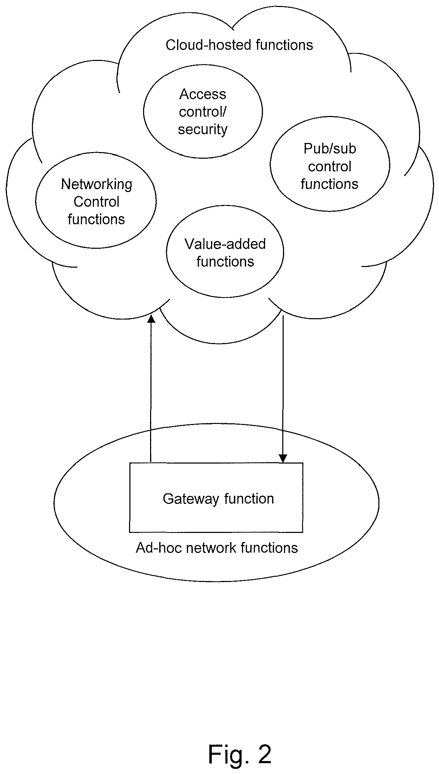

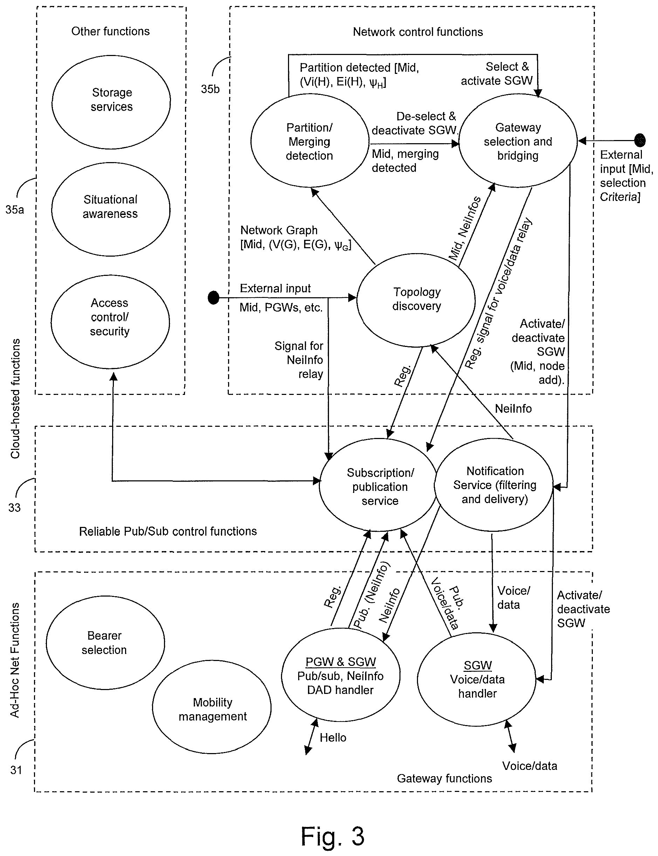

Figure 2 shows a schematic of functional entities and their interactions and value-added services provided by the cloud and by the gateway nodes in each ad-hoc network for bridging of the ad-hoc networks. The interactions between the functional entities is discussed in more detail with reference to Figure 3, which shows a proposed functional architecture for enabling bridging of two or more ad-hoc networks.

Referring to Figure 3, the proposed architecture specifies three levels of functions for detecting and merging partitioned/disjoint ad-hoc networks. The first level (Ad-hoc Net Functions) 31 specifies a set of functions at each ad-hoc network gateway that together provide control/data plane information services to the cloud and the ad-hoc network. The second level (Reliable Pub/Sub control functions) 33 provides publication/ subscription services at both control and data planes by the cloud. The functions of the second level can be specified as: 1) subscription, filtering and delivery of control/signalling information 2) Reliable delivery of data. The reliable Pub/Sub model concept has previously been described in e.g. M. Antikainen, "Reliable Data Delivery for Publish/Subscribe Networks", TKK T-110.5190 Seminar on Internetworking, May 2010." The third level introduces a set of co-operating functions 35a, 35b to be provided by the cloud including "Network Control Functions" to assist detecting partition/merging and selecting a gateway for relaying voice/data and other "value-added functions" required. The functions at this level also include Topology Discovery for establishing network connectivity.

It will be understood that, in the context of the present application, the "cloud" refers to software, platforms and infrastructure that are accessible remotely through a network that is external to the individual ad-hoc networks; the Network Control Functions discussed above may, for example, be hosted on a server or group of servers connected through a communication network such as the Internet, an intranet, a local area network (LAN) or wide area network (WAN), where those server(s) are located at remote locations from the actual nodes in the ad-hoc networks.

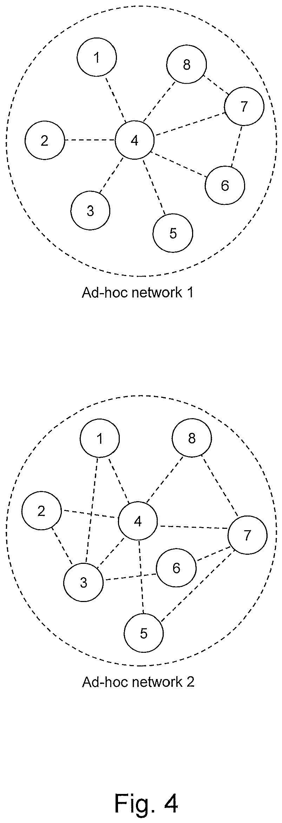

A method by which the architecture shown in Figure 3 can be used to provide connectivity between disjoint ad-hoc networks will now be described, with reference also to Figures 4 to 6.

In the presently described method, each node in an ad-hoc network needs to maintain a full network picture in terms of its own and others nodes' connectivity. In order to do so, the nodes in each (disjoint) ad-hoc network transmit and receive Hello messages to /from their respective neighbouring nodes. The Hello messages contain an indication of which other nodes are located one or more hops away. Hello messages may be exchanged between nodes periodically (e.g., every 2-sec) or at random intervals, in order to keep the network status up-to-date. It is assumed the ad-hoc network nodes are assigned nodes addresses and the process of duplicate address detection and resolution within each ad-hoc network will be carried out using the exchanged Hello messages prior to the start of any bridging operation.

The amount of information each node must store will depend on the network depth. As an example, Figure 4 shows two networks with a maximum network depth of three nodes. In this case, the full network picture can be constructed if each ad-hoc node keeps a record of nodes located 1-hop away (which will be those from which the node receives Hello messages) and nodes located 2-hops away, where details of the nodes located 2 hops away will also be included in the received Hello messages. For extended networks with greater depth, the Hello messages need to include more-hop neighbours, the ultimate number of which will scale with the network depth. Nodes that belong to the same mission (whether the network is partitioned/disjoint or not) use a unique mission identifier (Mid).

The nodes that are capable of connecting to an external network (referred to herein as potential gateway nodes PGWs) use the Hello messages they have received to formulate NeiInfo messages, which they then transmit to that external network. In essence, a NeiInfo message provides a summary of the network neighbourhood environment of the PGW sending the message. As an example, the message format of a NeiInfo message sent from a PGW in a network with a depth of three may be: {Mission Id (Mid), PGW node address, 1-hop neighbours list, 2-hop neighbours list; DA detected}. (Here, the term "DA" defines a "duplicate address"; as discussed in more detail below, the NeiInfo may include an indication of whether a node in another one of the ad-hoc networks is detected as having the same address as the node sending the present NeiInfo message).

It should be noted that the exchange of NeiInfo messages is not analogous to sending Hello messages; the Hello messages convey that the nodes exchanging messages are neighbours in the network. The NeiInfo, in contrast, does not convey that the gateways exchanging the NeiInfo are necessarily neighbours. Any node in the ad-hoc network, which has the capability of external network connectivity can be viewed as a Potential Gateway (PGW) and can pass NeiInfo to the cloud for ad-hoc network topology discovery.

The PGWs create and pass NeiInfo messages to the Topology Discovery module in the cloud, via the Pub/Sub Control Functions. The Topology Discovery module will use the information in the NeiInfo messages to compute a network topology graph. Before the Topology Discovery module does so, however, any duplication of node addresses in the ad-hoc network must be accounted for. To facilitate the alteration of duplicate addresses, the Pub/Sub Notification Service forwards each NeiInfo message it receives from a respective PGW to the other PGWs with which it is in contact, thereby allowing those PGWs having the same Mid to determine if a node in their respective ad-hoc network shares the same address as a node in one of the other ad-hoc networks. Upon detecting a duplicate address in its respective network, a PGW will request the relevant node to change the its address, this information being included in the next Hello message targeted for the node in question. When changing its address, each node should avoid using an address that is already known, based on the local information available at that node. In order not to flood the network with "duplicate address messages", duplicate address messages with the same repeated duplicate address can be removed by any receiving node. Duplicate address messages triggered by multiple PGWs can be removed by the target node (or the originator PGW) to prevent a loop from occurring.

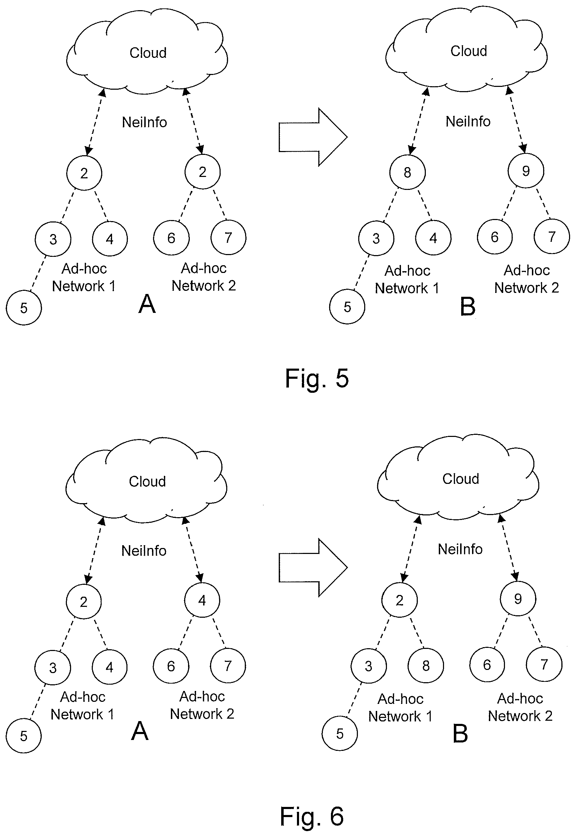

The process of detecting and altering duplicate network node address can be explained with reference to Figure 5. Figure 5A shows a first example of two disjoint ad-hoc networks that are willing to merge by communicating via the cloud. The PGWs in each network exchange NeiInfo messages between them via the cloud. In this case, the PGWs that transmit the NeiInfo messages themselves share duplicate addresses, this being detected upon receipt of one another's NeiInfo messages. Following this, the address of at least one of those PGWs is changed to avoid duplication (see Figure 5B).

Figure 6A shows another example of two disjoint ad-hoc networks that seek to merge. As before, the PGWs in each network exchange NeiInfo messages between them via the cloud. As a result, node 2 in ad-hoc network 1 is able to deduce that the node 4 in its network shares the same address as the PGW in ad-hoc network 2. The PGW (node 2 in Network 1) issues a duplicate address detected (DAD) message to the node 4 in its own network to change its address. Node 4 in ad-hoc network 1 changes its address (Figure 6B). Node 4 in ad-hoc network 2 may also change its address depending on information received via NeiInfo from ad-hoc network 1.

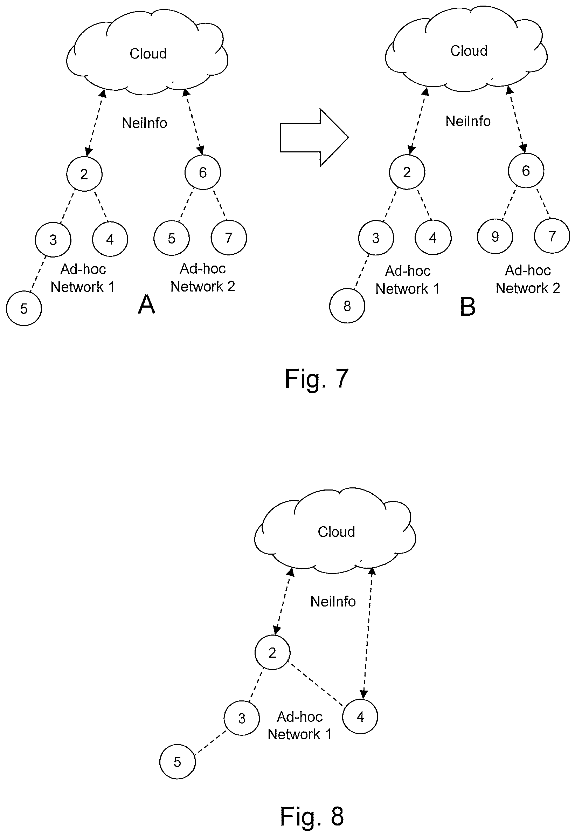

Figure 7A shows another example of two disjoint ad-hoc networks that seek to merge. Again, the PGWs in each network exchange NeiInfo messages between them via the cloud. As a result, node 2 in ad-hoc network 1 is able to deduce that the node 5, which is located 2 hops away in its respective network, shares the same address as a node that is located 1 hop away from the PGW (node 6) in the other ad-hoc network 2. The PGW in ad-hoc network 1 (node 2) issues a duplicate address detected (DAD) message to the node 5 in its own network to change its address. Node 5 in ad-hoc network 1 in turn changes its address (Figure 7B). Node 5 in ad-hoc network 2 may also change its address depending on information received via NeiInfo from ad-hoc network 1.

Figure 8 shows an example in which a single ad-hoc network 1 has two nodes (nodes 2 and 4) that are both capable of acting as PGWs with the cloud. In this example, the content of the NeiInfo message that is sent from each PGW will be the same, since it reflects the topology of the same single network. In turn, the two PGWs will also receive identical NeiInfo messages from the cloud. In this instance, each PGW is able to deduce that the other PGW that sent the NeiInfo message is in the same ad-hoc network, because the information contained in the NeiInfo message will be identical to the information contained in the Hello message that the node receives from the other nodes in the network.

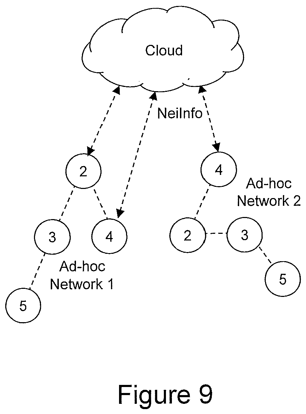

It is possible that a situation will arise where two ad-hoc networks that seek to merge have the exact same network topology and node addresses. An example is shown in Figure 9. Here, the ad-hoc network 1 and ad-hoc network 2 both have respective nodes 4 that act as PGWs to the cloud and which send NeiInfo via the cloud to one another. Since the network topology is the same in both ad-hoc networks, the NeiInfo that the two PGW nodes receive from the cloud will match the information contained in the Hello messages that they receive from the other nodes in their own network. It follows that the nodes 4 will be unable to determine whether the NeiInfo messages that they are receiving from the cloud originate from another node in the same ad-hoc network, or if they originate from a node in a different ad-hoc network that has the exact same network topology as their own ad-hoc network. In such a scenario, no action will be taken to detect DAD or merge the two networks unless a change in node addresses or connectivity occur in one of the ad-hoc networks.

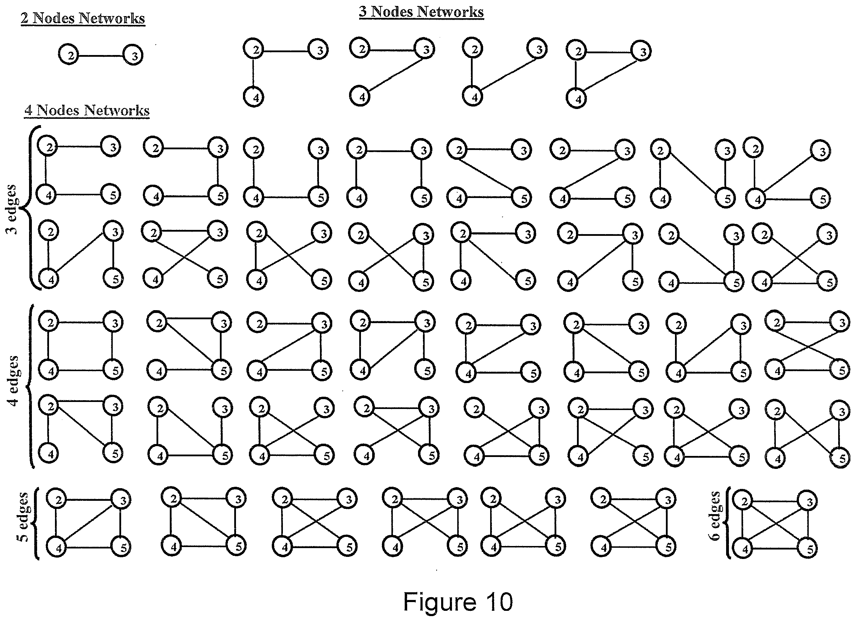

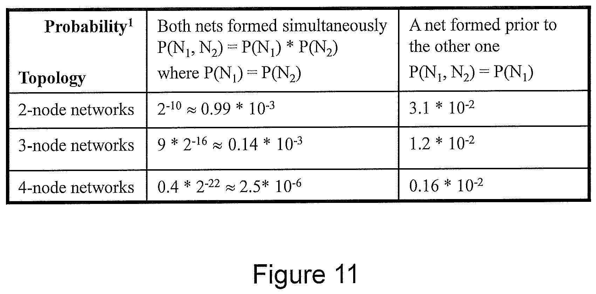

Whilst the above scenario may pose problems in dealing with duplicate node addresses in the two networks, it can be shown that the chances of there being two networks that share the exact same topology and addresses are vanishingly small, particularly as the number of nodes in the respective networks increases, so that this scenario can be safely ignored for the purpose of the present application. The probability of there being two identical disjoint networks to bridge can be explored with reference to Figures 10 and 11, as follows.

First, it will be noted that the joint probability P(A, B) of two events (A, B) occurring simultaneously is the product of the probabilities of each event occurring by itself i.e. $P(A, B) = P(A) \times P(B)$.

The probability of a network having a particular topology and group of addresses can be calculated as:

$$P(N_1) = [(\text{number of nodes}) / \text{possible addresses} \times (1 / \text{number of possible network topologies})], \text{ when the address order is taken into account.}$$

when the address order is taken into account.

If we assume there to be 64 possible addresses, then we can write:

$$P(N_1) = [(n/64] \times (1/k)$$

where n is the number of nodes and k is the number of possible topologies. Figure 10 shows how the number of different possible topologies scales with the number of nodes in the network. As shown in Figure 10, it can be seen that k = 1, 4 and 39 for networks having 2 nodes, 3 nodes and 4 nodes, respectively.

Figure 11 shows the probabilities that two networks having the same topology will be formed either simultaneously (middle column), or in sequence, one after the other (right hand column). The probabilities are very low, reflecting the small likelihood that two identical networks will require bridging via the cloud. It is further worth noting that the calculated figures in Figure 11 do not take into account which node in the respective networks is functioning as the actual PGW; therefore, the probability that two nodes in separate ad-hoc networks will send and receive identical NeiInfo messages via the cloud is in reality further reduced beyond that shown in Figure 11.

In practice, therefore, when a PGW receives NeiInfo messages that match the information contained in the Hello messages, it will be safe to assume that the PGW from which that NeiInfo originates is another node in the same ad-hoc network, rather than a node in a separate ad-hoc network that has the exact same network topology.

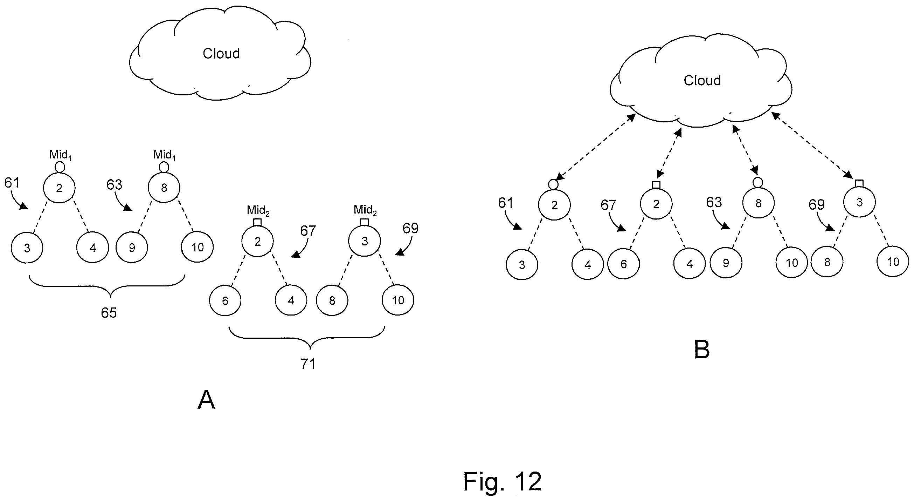

Figure 12 shows partitioned ad-hoc networks 61, 63, belonging to a first mission, 65 and disjoint ad-hoc networks 67, 69, belonging to a second mission 71. As shown in Figure 6B, by use of methods herein described, it is possible to bridge the ad-hoc networks belonging to the multiple missions.

Referring back to Figure 3, once duplicate addresses have been resolved, the topology discovery entity is able to use the information it receives in the following round of NeiInfo messages to compute the topology of the (combined) ad-hoc networks. The Topology Discovery module will only employ NeiInfo messages whose "DA detected" field is zero in its topology computation. In practice, therefore, at least one round of NeiInfo messages is sent in order for the nodes to identify and correct any duplicate addresses, and then a second round of NeiInfo messages, in which there are no duplicate addresses, is sent to the external system to allow the topology discovery module to begin constructing a network graph that reflects the topology of the respective networks.

When building the network graph, the Topology Discovery module receives the latest round of NeiInfo messages and establishes that the information received from the one or more PGWs (e.g., Mid1) are linked to a mission. The Topology Discovery module uses the NeiInfo messages to compute a Network Graph [V(G), E(G), $\psi$G)], where the values comprise a non-empty set of V(G) vertices, a set of E(G) of edges, and an incidence $\psi$(G) function that associates an edge of G with a pair of vertices of G:

$$G = (V(G), E(G), \psi_G)$$

$$V(G) = \{v_1, v_2, v_3, \ldots v_n\}$$

$$E(G) = \{x_1, x_2, x_3, \ldots x_r\}$$

$\psi_G(x_1) = v_1 v_2$ i.e., $x_1$ connects $v_1$ and $v_2$ $\psi_G(x_2) = v_2 v_3$, and so on.

The Topology Discovery Module in turn passes this information to the Partition/Merging Detection function, with each NeiInfo message being stored for further use.

The Partition/Merging Detection function uses an algorithm to detect any partitioning in the network using the Network Graph and stores the identified partitions as lists {Vi(H), Ei(H), $\psi$H}. A graph H is an ordered triple (V(H), E(H), $\psi_H$) where:

$$H = (V(H), E(H), \psi_H)$$

$$V(H) = \{v_a, v_b, v_c, \ldots v_m\}$$

$$E(H) = \{y_1, y_2, y_3, \ldots y_n\}$$

$\psi_G(y_1) = v_a v_b$ i.e., $y_1$ connects $v_a$ and $v_b$ $\psi_G(y_2) = v_c v_d$, and so on.

Each time the algorithm tries to add a new vertex to the V(H) list, a check is made as to whether the node (vertex) is already in the list V(H) or not. Each time a new round of NeiInfo messages is received at the cloud, the current state of the Network Graph {V(G), E(G), $\psi$(G)} is updated and examined to see if separate lists {Vi(H), Ei(H), $\psi$(H)} exist, where each of these separate lists represents a partition i.e. a group of nodes capable of communicating amongst themselves, but isolated from the other nodes in the original list G. As an example, in the event that the NeiInfo messages derive from 2 separate, disjoint ad-hoc networks, this will result in there being 2 separate partitions {V1(H), E1(H), $\psi$(H)}

and {V2(H), E2(H), $\psi$(H)} in the Network Graph. The Topology Discovery module sends the current list {V(G), E(G), $\psi$(G)} to the Partition/Merging Detection function in specific time intervals, which may be constant, for example.

A non-empty set of {V(H), E(H), $\psi$H} means that the group H is a partition of G. Each time the Partition/Merging Detection function performs a computation, it compares the results with the previous recorded state in order to retain states between topology computations. As the network topology might change at any time, the Partition/Merging Detection function must discover whether the network nodes in a partition are still connected to each other as a single ad-hoc network unit or not. If there is change in any partitioned network in terms of nodes' disappearance and disconnectivity, then the new Partition/Merging Detection computation takes over for that specific Mission ID (Mid).

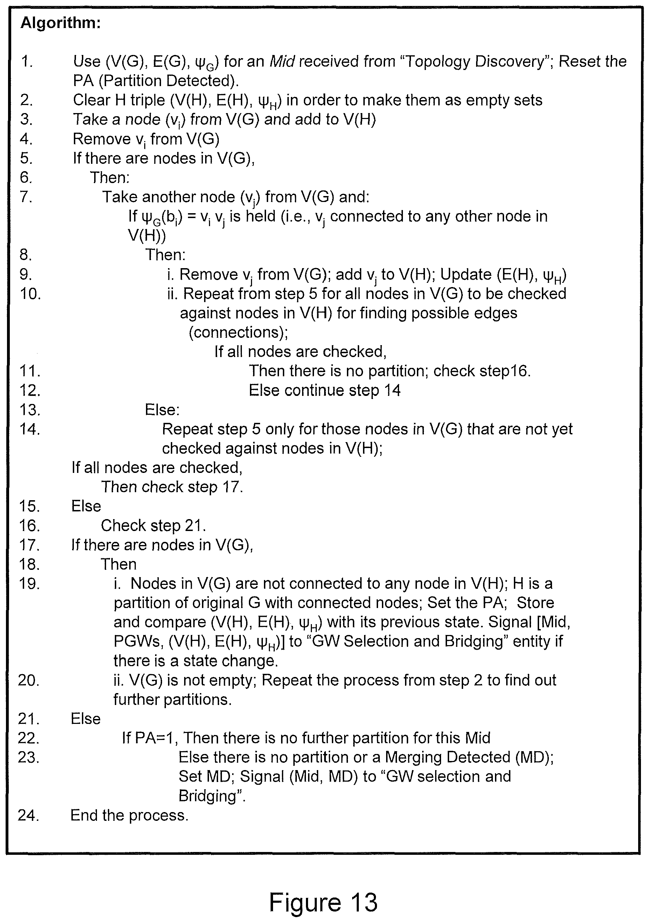

The above process can be implemented using the algorithm shown in Figure 13.

Once partitions are detected, a Selected Gateway (SGW) is chosen from the set of PGWs for each respective partition by the GW Selection & Bridging module for relaying data messages. Following this, the stored NeiInfo messages are associated with the Partition Graphs Vi(H) to maintain a record of which PGW belongs to which partition.

An informed choice of SGW can reduce the number of hops (and better use of slots) for relaying voice/data messages. Here, the GW Selection and Bridging module analyses the received NeiInfo for each partition. The PGW with a greatest 1-hop & 2-hop connectivity could be chosen.

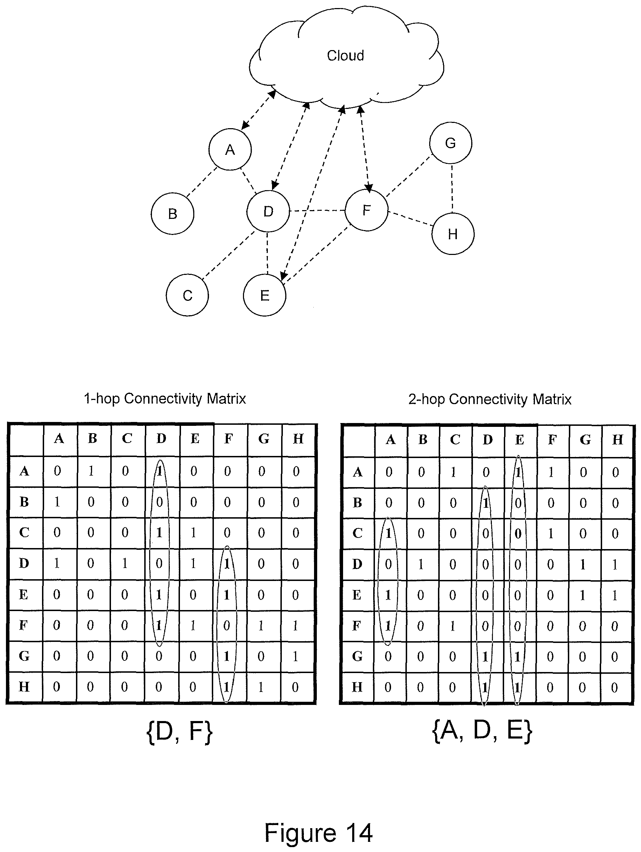

The process of choosing a SGW can be understood with reference to Figure 14, which shows an ad-hoc network comprising nodes A-H. The network includes 4 nodes (nodes A, D, E and F) that are capable of sending / receiving data to and from the cloud. Also shown in Figure 14 are matrices that highlight the connectivity of each node in the network. In the 1-hop connectivity matrix, a value of 1 indicates that the nodes in the respective column / row of that matrix element are within 1 hop of one another in the network. Similarly, in the 2-hop connectivity matrix, a value of 1 indicates that the nodes in the respective column / row of that matrix element are within 2 hops of one another in the network. In the present example, it can be seen that nodes D and F have the greatest connectivity when considering the number of nodes that are located 1 hop away. Nodes A, D and E meanwhile have the greatest connectivity when focussing on the number of nodes that are located 2 hops away. Thus, it can be seen that node D offers the highest overall connectivity and should be selected as the SGW for the ad-hoc network in question.

The Pub/sub application is next activated by the SGWs for voice/data message delivery between the respective ad-hoc networks. Any SGW that has already been chosen may stay active as long as it remains as a node in the new discovered partition. Otherwise a new SGW will need to be calculated. The Pub/sub applications in the cloud relay voice/data messages between SGWs having the same Mission ID (Mid). Each SGW takes part in Pub/Sub function for relaying data between bridged ad-hoc nets.

If there is no partitioning, either the original network is functioning or two or more ad-hoc networks have already merged. If there is merging detected (using the same Partitioning/ Merging algorithm), the SGWs of merged ad-hoc networks are de-selected by GW Selection & Bridging. If merging is detected, the topology states and stored NeiInfo will be removed by the relevant Network Control Functional entities.

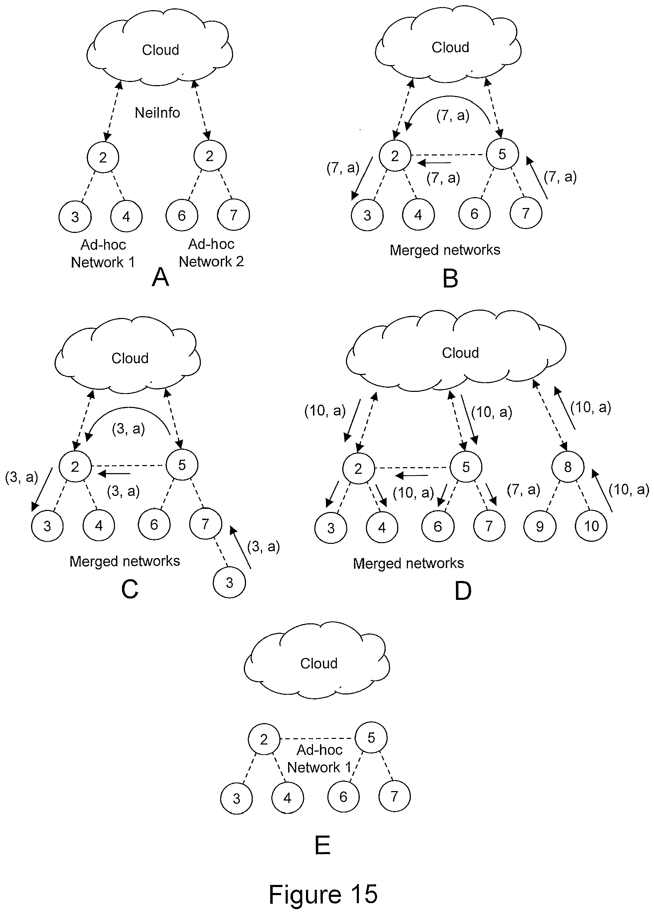

Figure 15 shows an example of voice / data message handling when two ad-hoc networks are merged with one another. Figure 15A shows the two networks, which are partitioned at time t1. Figure 15B shows the two networks at a later time point t2, when they have been merged. At this point in time, the SGW nodes 2 and 5 are still operating. Thus, whilst node 5 relays a voice/data message (7, a) from node 7 to node 2 directly, node 5 also transmits the same message via the cloud. Node 2 in turn receives both copies of the message, but discards the one received via the cloud.

Figure 15C again shows the two networks at a still later point in time t3, following the sudden appearance of another node (node 3), which in turn transmits a message (3,a). The message is relayed via nodes 7, 5 and 2 to the node 3 on the other side of the network. As in Figure 15B, the node 5 relays the message to node 2 both directly and via the cloud, with the message that is relayed via the cloud being discarded by node 2. On receipt of the message (3, a), the original node 3 issues a DAD message.

Figure 15D shows an example in which a third network, comprising nodes 8,9 and 10, is bridged with the two merged networks via the cloud. In this example, node 10 transmits a voice / data message (10,a) via the cloud, with both the node 2 and 5 being able to receive the message from the cloud. Following the receipt of the message (10, a), node 5 accesses the slot and broadcasts the message (10, a). Node 2, therefore, receives a copy of the message from both node 5 and the cloud. Having received the copy of the message that was sent from node 5 first, node 2 in turn discards the copy of the message that it receives from the cloud.

Figure 15E shows normal operation of the merged network once the nodes 2 and 5 have been deselected as SGWS.

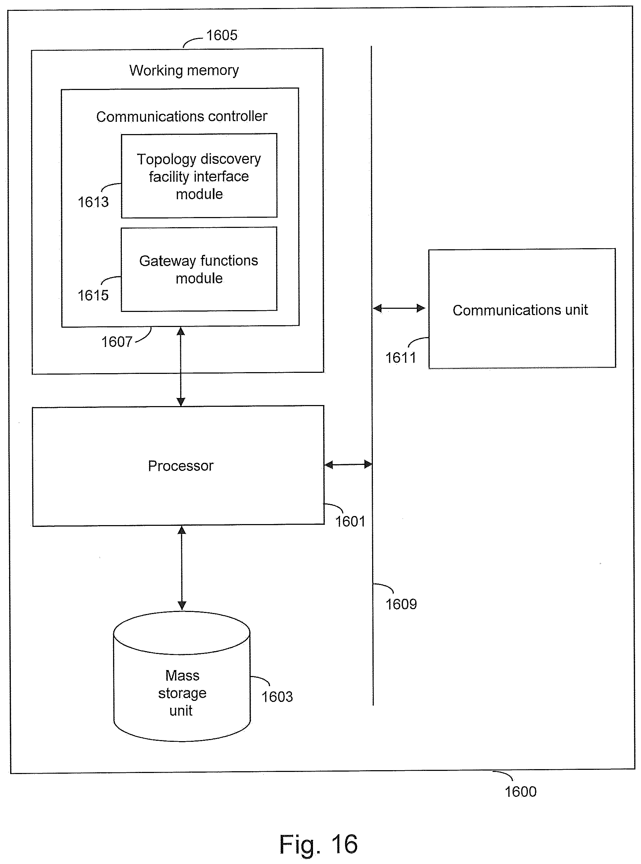

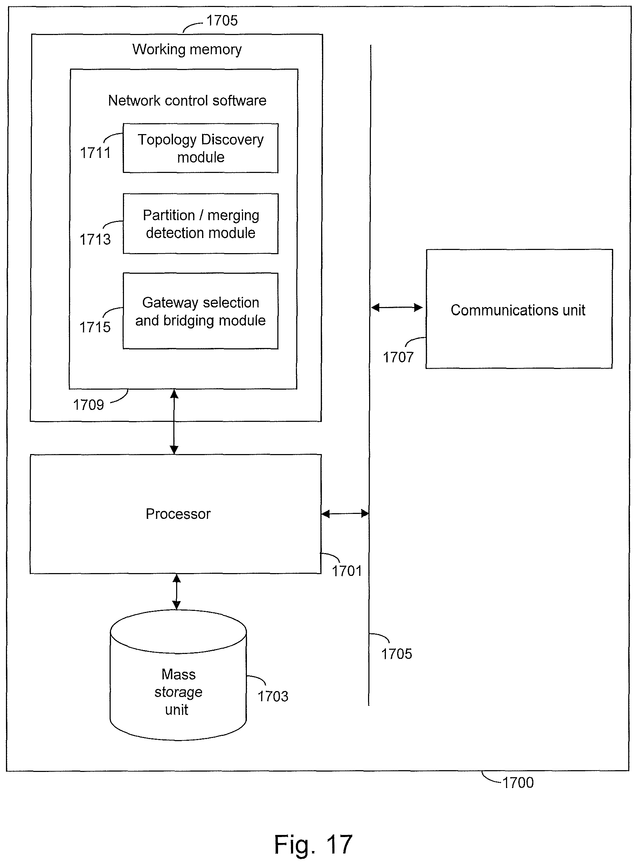

Figures 16 and 17 provide examples, respectively, of a wireless communication device and cloud based server device that together provide means capable of putting an embodiment, as described herein, into effect. Referring first to Figure 16, the wireless communication device 1600, which can be understood to comprise a node in an ad-hoc wireless network, comprises a processor 1601 coupled to a mass storage unit 1603 and accessing a working memory 1605. As illustrated, a communications controller 1607 is represented as a software product stored in working memory 1605. However, it will be appreciated that elements of the communications controller 1607 may, for convenience, be stored in the mass storage unit 1603.

Usual procedures for the loading of software into memory and the storage of data in the mass storage unit 1603 apply. The processor 1601 also accesses, via bus 1609, a communications unit 1611 that operates to effect communications with other nodes in the ad-hoc network, as well as facilitating communication with the cloud-based server device of Figure 17, discussed below. Typically, the communications unit 1611 will comprise one or more antennas to act as a transmitter and receiver for establishing a communications link with these other network entities, as well as connectivity to the cloud, for example.

The communications controller 1607 includes a topology discovery facility interface module 1613 that is operable to establish an interface with a topology discovery facility module hosted on the cloud based server, and to assemble neighbourhood information messages for submitting to the topology discovery module by implementing steps described above in relation to the various embodiments. In some embodiments, the interface module 1613 may comprise a Pub/Sub control interface module whereby data and / or messages are exchanged between the communication device 1600 and the topology discovery facility of the cloud based server using a publish-subscribe protocol.

The communications controller 1607 also includes a gateway functions module 1615 that is operable to bridge communication between the communication device 1600 and other similar communication devices in disjoint network(s). In the event that the communication device 1600 is selected as a gateway node, the gateway functions module is operable to collate messages received from other devices in the same ad-hoc network as the communication 1600 for transmission to the other ad-hoc network(s) via the external network.

In a similar fashion to Figure 16, Figure 17 shows an example of a hardware structure for a cloud based server device capable of putting embodiments, as described herein, into effect. As illustrated, the server 1700 comprises a processor 1701 coupled to a mass storage unit 1703 and accessing a working memory 1705. The processor 1701 also accesses, via bus 1705, a communications unit 1707 that operates to effect communications with other nodes in different ad-hoc networks and to external networks (e.g. 3G/WiFi); the communications unit 1707 is operable to receive and relay neighbourhood information messages transmitted by nodes in the respective ad-hoc networks.

Network control software 1709 is stored in working memory 1705 (as before, it will be appreciated that elements of the network control software may, for convenience, be stored in the mass storage unit 1703). The network control software 1709 includes a topology discovery module 1711, partition / merging detection module 1713 and gateway selection and bridging module 1715. The topology discovery module is configured to compute topologies of ad-hoc networks based on the neighbourhood information messages received from nodes in those networks (such as communication device 1600 of Figure 16). As discussed above, the communication device 1600 may communicate with the topology discovery module via a pub/sub interface. The partition / merging detection module is in turn configured to determine the presence of partitions within individual ad-hoc networks / mergers between different ad-hoc networks by detecting changes in the topologies of networks as computed by the topology discovery module 1715. The gateway selection and bridging module in turn is configured to select nodes in the respective ad-hoc networks to use as gateways for bridging communication between those ad-hoc networks and to define a communication pathway through the external network by means of which the selected gateway nodes networks may exchange data with one another.

Both the communications controller software 1607 of Figure 16 and the network control software of Figure 17 can be embedded in original equipment, or can be provided, as a whole or in part, after manufacture. For instance, the communications controller software 1607 and network control software 1709 can be introduced as respective computer program products, which may be in the form of a download, or be introduced via a computer program storage medium, such as an optical disk. Alternatively, modifications to existing devices can be made by updates or plug-ins to provide features of the above described embodiments.

It will also be understood that, whilst the topology discovery facility interface module 1711, partition / merging detection module 1713 and gateway selection and bridging module 1715 are each shown in Figure 17 as being hosted on a single device 1700, these modules themselves may be distributed within the cloud environment i.e. each module may be hosted on a different respective server, where the various servers are each interconnected with one another via the external network.

A non-exhaustive list of the functional entities and their interactions and value-added services provided by the cloud infrastructure and by the ad-hoc network gateways shown in Figure 3 includes the following:

- Bearer selection for ad-hoc network communication with the cloud
- Exchange of topological information between ad-hoc networks gateways that belong to a group via the cloud
- Duplicate Address Detection (DAD) and resolution across partitioned/disjoint ad-hoc networks by the gateways to enable the proper bridging operation
- Discovering the topology of ad-hoc networks
- Detection of ad-hoc network partitions by the cloud; ad-hoc network partitioning is detected by passing neighbourhood information (collected through Hello messages) to the cloud.
- Selection of designated nodes acting as ad-hoc networks gateways to the external network and subsequently to the cloud for relaying voice/data messages.
- Subscription and publication of control/data signals/messages by the cloud
- Multiplexing multiple ad-hoc networks that belong to a group/mission
- Handling of voice/data messages when ad-hoc networks are merged
- Access control mechanism for providing secure access for control and data communication.

According to embodiments described herein, the normal operation of the ad-hoc networks is unaltered, but their reachability is extended in a manner that is transparent to the users. Embodiments described herein provide enhanced means for managing connectivity between those networks by proposing a cloud infrastructure with cloud-hosted functions and services. The principle of cloud-hosted services/functions can be used in other scenarios such as connectivity constraint and delay tolerant networks.

Advantages of embodiments described herein include:

a) Extending the reachability and range of ad-hoc nodes automatically
b) Bridging partitioned/disjoint ad-hoc networks
c) Create a better and safer environment for isolated nodes/networks belonging to a mission to communicate with others
d) The infrastructure and cloud-hosted functions can also be used to provide a bridging service to multiple independent operations
e) Any available external network (3G/WiFi, etc.) can be used for network connection to the cloud.
f) Suitable for those networks that are quickly deployed for operation in highly dense urban areas.

While certain embodiments have been described, these embodiments have been presented by way of example only, and are not intended to limit the scope of the invention.

**Claims**

1. A method for establishing communication between a first node (5) in a first wireless network (1) and nodes (7, 9) of another wireless network (2, 3), the method comprising:

   providing, at the first node (5), an interface for interfacing with an external network facility, the external network facility comprising a topology discovery module;
   submitting a neighbourhood information message from the first node (5) to the topology discovery module, wherein the neighbourhood information message provides an indication of nodes in the first wireless network (1) with which the first node (5) is currently able to communicate, the topology discovery module being configured to compute the topology of networks to which respective nodes belong based on neighbourhood information messages received by the topology discovery module from those nodes;
   receiving at the first node (5), information sent from the external network facility for setting up a communication pathway between the first node (5) and nodes of a second wireless network, the second wireless network (2, 3) being identified by the topology discovery module as being a different wireless network from the first wireless network by virtue of its having a different network topology from the first wireless network (1).

2. A method according to claim 1, wherein the step of submitting a neighbourhood information message from the first node (5) to the external network facility is repeated at predetermined intervals.

3. A method according to claim 2, wherein during each interval, the first node (5) receives one or more second neighbourhood information messages from other nodes (7, 9) having respective interfaces for interfacing with the external network facility, each second neighbourhood information message providing an indication of other nodes with which the node (7, 9) issuing the respective second neighbourhood information message is currently able to communicate;

   wherein on receiving a respective second neighbourhood message, the first node (5) determines whether the second neighbourhood message includes reference to a node having a conflicting address, wherein a conflicting address is one that matches an address of a node in the first network (1) but which belongs to a node in a network (2, 3) different from the first network (1);
   wherein, on determining that a node with a conflicting address is present in one of the second neighbourhood messages, the first node (5) submits a request to the external network facility for the node having the conflicting address to change its address; and optionally wherein:

the first node (5) continues to send neighbourhood information messages to the external network facility notifying the external network facility of the presence of a node with a conflicting address until such time as the first node (5) receives confirmation from the external network facility that the node having the conflicting address has now changed its address.

4. A method according to claim 3, wherein the first node (5) only receives the information for setting up the communication pathway once any of the node(s) identified as having a conflicting address have changed their address.

5. A method for facilitating communication between nodes (5, 7, 9) belonging to different wireless networks (1, 2, 3) performed by an external network facility comprising a topology discovery module, the method comprising:

   i) receiving neighbourhood information messages sent from respective network nodes (5, 7, 9) to the external network facility, wherein each received neighbourhood information message provides an indication of other nodes with which the node (5, 7, 9) that sent the message is currently able to communicate;
   ii) for each node (5, 7, 9) from which a neighbourhood message is received, using the received neighbourhood messages to compute the topology of a network (1, 2, 3) to which that node belongs;
   iii) determining, based on the computed network topologies, whether respective ones of the nodes (5, 7, 9) belong to different networks from one another, wherein a second wireless network (2,3) is identified by the topology discovery module as being different from a first wireless network (1) by virtue if its having a different network topology from the first wireless network (1); wherein in the event that it is determined that respective ones of the nodes (5, 7, 9) belong to different networks, the method further comprises:
   iv) identifying within each one of the different networks (1, 2, 3) a node (5, 7, 9) to serve as a gateway node for bridging communication between the different networks (1, 2, 3); and
   v) providing to one of the nodes (5, 7, 9) information for setting up a communication pathway through the gateway node, with nodes of a different network.

6. A method according to claim 5, comprising repeating steps i) to iii) at predetermined intervals.

7. A method according to claim 6, wherein in each interval, the computed topology(s) are stored in memory and compared with the computed topology(s) stored in memory from the previous interval.

8. A method according to claim 6 or 7, wherein in each interval, the neighbourhood information message that is received from each respective node (5, 7, 9) is forwarded to the other nodes from which neighbourhood information messages have also been received.

9. A method according to claim 8, wherein in response to forwarding the neighbourhood information messages to the respective nodes (5, 7, 9), it is determined whether or not a request has been received for a node identified in a first one of the neighbourhood information messages to change its address;
   wherein in the event that a request has been received, the request is forwarded to the node (5, 7, 9) that transmitted the first neighbourhood information message.

10. A method according to claim 9, wherein in the event that a request has been received for a node identified in a first one of the neighbourhood information messages to change its address, steps iv) and v) are deferred until the next interval in which no such request is received.

11. A method according to any one of claims 1 to 10, wherein each neighbourhood information message includes a list of the nearest neighbours of the node (5, 7, 9) sending the message; and optionally wherein:
   each neighbourhood information message includes a list of nodes located two or more hops away from the node (5, 7, 9) sending the neighbourhood information message.

12. A method according to claim 11, wherein each neighbourhood information message specifies a list of all nodes that the node (5, 7, 9) sending the message is able to communicate with in its network and the number of hops between that node (5, 7, 9) and those other nodes.

13. A method according to any one of the previous claims, wherein the external network utilises a common external network for network connectivity and a cloud based functionality for topology discovery and detection of network partitioning.

14. A computer readable storage medium comprising computer executable instructions that when executed by a computer will cause the computer to carry out a method according to any one of the preceding claims.

15. A communication device (1600) operable to act as a node (5) in a first wireless network (1), the communication device (1600) comprising:
a topology discovery facility interface module (1613) operable to:

establish an interface for interfacing with an external network facility, the external network facility comprising a topology discovery module,

submit a neighbourhood information message to the topology discovery module, wherein the neighbourhood information message provides an indication of the other nodes in the first network with which the communication device (1600) is currently able to communicate, the topology discovery module being configured to compute the topology of networks to which respective nodes belong based on neighbourhood information messages received by the topology discovery module from those nodes;

receive information sent from the external network facility for setting up a communication path between the first communication device and a second communication device operable to act as a node of a second wireless network (2,3), the second communication device being identified by the topology discovery module as belonging to the second wireless network, the second wireless network (2,3) being identified by the topology discovery module as being a different wireless network from the first wireless network by virtue of its having a different network topology from the first wireless network (1).


**Patentansprüche**

1. Verfahren zum Herstellen einer Kommunikation zwischen einem ersten Knoten (5) in einem ersten drahtlosen Netzwerk (1) und Knoten (7, 9) eines anderen drahtlosen Netzwerks (2, 3), wobei das Verfahren Folgendes umfasst:

Bereitstellen, an dem ersten Knoten (5), einer Schnittstelle zur Schnittstellenbildung mit einer externen Netzwerkeinrichtung wobei die externe Netzwerkeinrichtung ein Topologie-Erkennungsmodul umfasst;

Übertragen einer Nachbarschaftsinformationsnachricht von dem ersten Knoten (5) an das Topologie-Erkennungsmodul, wobei die Nachbarschaftsinformationsnachricht einen Hinweis auf Knoten in dem ersten drahtlosen Netzwerk (1) bereitstellt, mit denen der erste Knoten (5) derzeit kommunizieren kann, wobei das Topologie-Erkennungsmodul konfiguriert ist, um die Topologie von Netzwerken zu berechnen, zu denen jeweilige Knoten gehören, basierend auf Nachbarschaftsinformationsnachrichten, die von dem Topologie-Erkennungsmodul von diesen Knoten empfangen werden;

Empfangen von Informationen an dem ersten Knoten (5), die von der externen Netzwerkeinrichtung gesendet werden, um einen Kommunikationspfad zwischen dem ersten Knoten (5) und Knoten eines zweiten drahtlosen Netzwerks einzurichten, wobei das zweite drahtlose Netzwerk (2, 3) von dem Topologie-Erkennungsmodul als ein anderes drahtloses Netzwerk als das erste drahtlose Netzwerk identifiziert wird, da es eine andere Netzwerktopologie als das erste drahtlose Netzwerk (1) aufweist.

2. Verfahren nach Anspruch 1, wobei der Schritt eines Absendens einer Nachbarschaftsinformationsnachricht von dem ersten Knoten (5) an die externe Netzwerkeinrichtung in vorbestimmten Intervallen wiederholt wird.

3. Verfahren nach Anspruch 2, wobei der erste Knoten (5) während jedes Intervalls eine oder mehrere zweite Nachbarschaftsinformationsnachrichten von anderen Knoten (7, 9) empfängt, die entsprechende Schnittstellen zur Schnittstellenbildung mit der externen Netzwerkeinrichtung aufweisen, wobei jede zweite Nachbarschaftsinformationsnachricht einen Hinweis auf andere Knoten bereitstellt, mit denen der Knoten (7, 9), der die jeweilige zweite Nachbarschaftsinformationsnachricht ausgibt, aktuell kommunizieren kann;

wobei der erste Knoten (5) bei Empfangen einer jeweiligen zweiten Nachbarschaftsnachricht bestimmt, ob die zweite Nachbarschaftsnachricht einen Verweis auf einen Knoten mit einer widersprüchlichen Adresse beinhaltet, wobei eine widersprüchliche Adresse eine Adresse ist, die mit einer Adresse eines Knotens in dem ersten Netzwerk (1) übereinstimmt, die aber zu einem Knoten in einem Netzwerk (2, 3) gehört, das sich von dem ersten Netzwerk (1) unterscheidet;

wobei der erste Knoten (5) bei Bestimmen, dass ein Knoten mit einer widersprüchlichen Adresse in einer der zweiten Nachbarschaftsnachrichten vorhanden ist, eine Anforderung an die externe Netzwerkeinrichtung absendet, damit der Knoten mit der widersprüchlichen Adresse seine Adresse ändert; und optional wobei:
der erste Knoten (5) weiterhin Nachbarschaftsinformationsnachrichten an die externe Netzwerkeinrichtung sendet, die der externen Netzwerkeinrichtung das Vorhandensein eines Knotens mit einer widersprüchlichen Adresse mitteilt, bis der erste Knoten (5) von der externen Netzwerkeinrichtung eine Bestätigung erhält, dass der Knoten mit der widersprüchlichen Adresse seine Adresse nun geändert hat.

4. Verfahren nach Anspruch 3, wobei der erste Knoten (5) erst dann die Informationen zum Einrichten des Kommunikationspfads empfängt, wenn jeder der Knoten, die als Knoten mit einer widersprüchlichen Adresse identifiziert werden, seine Adresse geändert hat.

5. Verfahren zum Ermöglichen einer Kommunikation zwischen Knoten (5, 7, 9), die zu verschiedenen drahtlosen Netzwerken (1, 2, 3) gehören, die von einer externen Netzwerkeinrichtung ausgeführt werden, die ein Topologie-Erkennungsmodul umfasst, wobei das Verfahren Folgendes umfasst:

i) Empfangen von Nachbarschaftsinformationsnachrichten, die von jeweiligen Netzwerkknoten (5, 7, 9) an die externe Netzwerkeinrichtung gesendet werden, wobei jede empfangene Nachbarschaftsinformationsnachricht einen Hinweis auf andere Knoten bereitstellt, mit denen der Knoten (5, 7, 9), der die Nachricht gesendet hat, aktuell kommunizieren kann;
ii) für jeden Knoten (5, 7, 9), von dem eine Nachbarschaftsnachricht empfangen wird, Verwenden der empfangenen Nachbarschaftsnachrichten, um die Topologie eines Netzwerks (1, 2, 3) zu berechnen, zu dem dieser Knoten gehört;
iii) Bestimmen, basierend auf den berechneten Netzwerktopologien, ob jeweilige der Knoten (5, 7, 9) zu voneinander verschiedenen Netzwerken gehören, wobei ein zweites drahtloses Netzwerk (2, 3) von dem Topologie-Erkennungsmodul als verschieden von einem ersten drahtlosen Netzwerk (1) identifiziert wird, wenn es eine andere Netzwerktopologie als das erste drahtlose Netzwerk (1) aufweist;
wobei für den Fall, dass bestimmt wird, dass jeweilige der Knoten (5, 7, 9) zu verschiedenen Netzwerken gehören, das Verfahren ferner Folgendes umfasst:
iv) Identifizieren eines Knotens (5, 7, 9) innerhalb eines jeden der verschiedenen Netzwerke (1, 2, 3), um als Gateway-Knoten zum Überbrücken einer Kommunikation zwischen den verschiedenen Netzwerken (1, 2, 3) zu dienen; und
v) Bereitstellen von Informationen an einen der Knoten (5, 7, 9) zum Einrichten eines Kommunikationspfads durch den Gateway-Knoten mit Knoten eines anderen Netzwerks.

6. Verfahren nach Anspruch 5, umfassend ein Wiederholen von Schritten i) bis iii) in vorbestimmten Intervallen.

7. Verfahren nach Anspruch 6, wobei in jedem Intervall die berechnete(n) Topologie(n) in einem Speicher gespeichert und mit der/den in dem Speicher gespeicherten berechneten Topologie(n) aus dem vorherigen Intervall verglichen werden.

8. Verfahren nach Anspruch 6 oder 7, wobei in jedem Intervall die von jedem jeweiligen Knoten (5, 7, 9) empfangene Nachbarschaftsinformationsnachricht an die anderen Knoten weitergeleitet wird, von denen auch Nachbarschaftsinformationsnachrichten empfangen wurden.

9. Verfahren nach Anspruch 8, wobei als Reaktion auf ein Weiterleiten der Nachbarschaftsinformationsnachrichten an die jeweiligen Knoten (5, 7, 9) bestimmt wird, ob eine Anforderung für einen Knoten empfangen wurde, der in einer ersten der Nachbarschaftsinformationsnachrichten identifiziert wird, um seine Adresse zu ändern;
wobei in dem Fall, dass eine Anforderung empfangen wurde, die Anforderung an den Knoten (5, 7, 9) weitergeleitet wird, der die erste Nachbarschaftsinformationsnachricht gesendet hat.

10. Verfahren nach Anspruch 9, wobei in dem Fall, dass eine Anforderung für einen Knoten empfangen wurde, der in einer ersten der Nachbarschaftsinformationsnachrichten identifiziert wird, um seine Adresse zu ändern, die Schritte iv) und v) auf das nächste Intervall verschoben werden, in dem keine solche Anforderung empfangen wird.

11. Verfahren nach einem der Ansprüche 1 bis 10, wobei jede Nachbarschaftsinformationsnachricht eine Liste der nächstgelegen Nachbarn des Knotens (5, 7, 9) beinhaltet, die die Nachricht senden; und optional wobei:
jede Nachbarschaftsinformationsnachricht eine Liste von Knoten enthält, die sich zwei oder mehr Hops entfernt von dem Knoten (5, 7, 9) befinden, der die Nachbarschaftsinformationsnachricht sendet.

12. Verfahren nach Anspruch 11, wobei jede Nachbarschaftsinformationsnachricht eine Liste aller Knoten angibt, mit denen der die Nachricht sendende Knoten (5, 7, 9) in seinem Netzwerk kommunizieren kann, und die Anzahl von Hops zwischen diesem Knoten (5, 7, 9) und diesen anderen Knoten.

13. Verfahren nach einem der vorherigen Ansprüche, wobei das externe Netzwerk ein gemeinsames externes Netzwerk für eine Netzwerkkonnektivität und eine Cloud-basierte Funktion für Topologieerkennung und Erfassung von Netzwerkpartitionierung verwendet.

14. Computerlesbares Speichermedium, umfassend computerausführbare Anweisungen, die, wenn sie von einem Computer ausgeführt werden, den Computer veranlassen, ein Verfahren gemäß einem der vorherigen Ansprüche auszuführen.

15. Kommunikationsvorrichtung (1600), die betrieben werden kann, um als Knoten (5) in einem ersten drahtlosen Netzwerk (1) zu fungieren, wobei die Kommunikationsvorrichtung (1600) Folgendes umfasst:
ein Topologie-Erkennungseinrichtung-Schnittstellenmodul (1613), das zu Folgendem betrieben werden kann:

Einrichten einer Schnittstelle zur Schnittstellenbildung mit einer externen Netzwerkeinrichtung, wobei die externe Netzwerkeinrichtung ein Topologie-Erkennungsmodul umfasst,
Senden einer Nachbarschaftsinformationsnachricht an das Topologie-Erkennungsmodul,
wobei die Nachbarschaftsinformationsnachricht einen Hinweis auf die anderen Knoten in dem ersten Netzwerk bereitstellt, mit denen die Kommunikationsvorrichtung (1600) aktuell kommunizieren kann, wobei das Topologie-Erkennungsmodul konfiguriert ist, um die Topologie von Netzwerken zu berechnen, zu denen jeweilige Knoten gehören, basierend auf Nachbarschaftsinformationsnachrichten, die von dem Topologie-Erkennungsmodul von diesen Knoten empfangen werden;
Empfangen von Informationen, die von der externen Netzwerkeinrichtung gesendet werden, um einen Kommunikationspfad zwischen der ersten Kommunikationsvorrichtung und einer zweiten Kommunikationsvorrichtung einzurichten, die betrieben werden kann, um als Knoten eines zweiten drahtlosen Netzwerks (2, 3) zu fungieren, wobei die zweite Kommunikationsvorrichtung von dem Topologie-Erkennungsmodul als zum zweiten drahtlosen Netzwerk gehörig identifiziert wird, wobei das zweite drahtlose Netzwerk (2, 3) von dem Topologie-Erkennungsmodul als ein anderes drahtloses Netzwerk als das erste drahtlose Netzwerk identifiziert wird, da es eine andere Netzwerktopologie als das erste drahtlose Netzwerk (1) aufweist.

**Revendications**

1. Procédé d'établissement de communication entre un premier noeud (5) dans un premier réseau sans fil (1) et des noeuds (7, 9) d'un autre réseau sans fil (2, 3), le procédé comprenant les étapes ci-dessous consistant à :

fournir, au niveau du premier noeud (5), une interface en vue de l'interfaçage avec une installation de réseau externe, l'installation de réseau externe comprenant un module de découverte de topologie ;
soumettre un message d'information de voisinage, du premier noeud (5) au module de découverte de topologie, dans lequel le message d'information de voisinage fournit une indication des noeuds dans le premier réseau sans fil (1) avec lesquels le premier noeud (5) est actuellement en mesure de communiquer, le module de découverte de topologie étant configuré de manière à calculer la topologie de réseaux auxquels appartiennent des noeuds respectifs, sur la base de messages d'information de voisinage reçus par le module de découverte de topologie en provenance de ces noeuds ;
recevoir, au niveau du premier noeud (5), des informations envoyées à partir de l'installation de réseau externe pour établir une voie de communication entre le premier noeud (5) et des noeuds d'un second réseau sans fil, le second réseau sans fil (2, 3) étant identifié par le module de découverte de topologie comme étant un réseau sans fil différent du premier réseau sans fil du fait qu'il présente une topologie de réseau différente de celle du premier réseau sans fil (1).

2. Procédé selon la revendication 1, dans lequel l'étape consistant à soumettre un message d'information de voisinage du premier noeud (5) à l'installation de réseau externe est répétée à des intervalles prédéterminés.

3. Procédé selon la revendication 2, dans lequel, au cours de chaque intervalle, le premier noeud (5) reçoit un ou plusieurs seconds messages d'information de voisinage en provenance d'autres noeuds (7, 9) présentant des interfaces respectives pour l'interfaçage avec l'installation de réseau externe, chaque second message d'information de voisinage fournissant une indication d'autres noeuds avec lesquels le noeud (7, 9) émettant le second message d'information de voisinage respectif est actuellement en mesure de communiquer ;

dans lequel, dans le cadre de la réception d'un second message d'information de voisinage respectif, le premier noeud (5) détermine si le second message d'information de voisinage inclut une référence à un noeud présentant une adresse conflictuelle, dans lequel une adresse conflictuelle est une adresse qui correspond à une adresse d'un noeud dans le premier réseau (1), mais qui appartient à un noeud dans un réseau (2, 3) différent du premier réseau (1) ;

dans lequel, dans le cadre d'une détermination selon laquelle un noeud avec une adresse conflictuelle est présent dans l'un des seconds messages d'information de voisinage, le premier noeud (5) soumet une demande à l'installation de réseau externe pour que le noeud présentant l'adresse conflictuelle modifie son adresse ; et facultativement dans lequel :

le premier noeud (5) continue d'envoyer des messages d'information de voisinage à l'installation de réseau externe, notifiant, à l'installation de réseau externe, la présence d'un noeud avec une adresse conflictuelle, jusqu'à ce que le premier noeud (5) reçoive une confirmation de l'installation de réseau externe que le noeud présentant l'adresse conflictuelle a désormais modifié son adresse.

4.  Procédé selon la revendication 3, dans lequel le premier noeud (5) ne reçoit les informations pour établir la voie de communication qu'une fois que l'un quelconque des noeuds identifiés comme présentant une adresse conflictuelle a modifié son adresse.

5.  Procédé pour faciliter la communication entre des noeuds (5, 7, 9) appartenant à différents réseaux sans fil (1, 2, 3), mis en oeuvre par une installation de réseau externe comprenant un module de découverte de topologie, le procédé comprenant les étapes ci-dessous consistant à :

    i) recevoir des messages d'information de voisinage envoyés à partir de noeuds de réseau respectifs (5, 7, 9) à l'installation de réseau externe, dans lequel chaque message d'information de voisinage reçu fournit une indication d'autres noeuds avec lesquels le noeud (5, 7, 9) qui a envoyé le message est actuellement en mesure de communiquer ;
    ii) pour chaque noeud (5, 7, 9) à partir duquel un message d'information de voisinage est reçu, utiliser les messages d'information de voisinage reçus en vue de calculer la topologie d'un réseau (1, 2, 3) auquel ce noeud appartient ;
    iii) déterminer, sur la base des topologies de réseau calculées, si des noeuds respectifs parmi les noeuds (5, 7, 9) appartiennent à des réseaux différents les uns des autres, dans lequel un second réseau sans fil (2, 3) est identifié par le module de découverte de topologie comme étant différent d'un premier réseau sans fil (1) du fait qu'il présente une topologie de réseau différente de celle du premier réseau sans fil (1) ;
    dans lequel, dans le cas où il est déterminé que des noeuds respectifs parmi les noeuds (5, 7, 9) appartiennent à des réseaux différents, le procédé comprend en outre les étapes ci-dessous consistant à :
    iv) identifier, au sein de chacun des différents réseaux (1, 2, 3), un noeud (5, 7, 9) destiné à servir de noeud de passerelle pour ponter la communication entre les différents réseaux (1, 2, 3) ; et
    v) fournir, à l'un des noeuds (5, 7, 9), des informations pour établir une voie de communication à travers le noeud de passerelle, avec des noeuds d'un réseau différent.

6.  Procédé selon la revendication 5, comprenant l'étape consistant à répéter les étapes i) à iii) à des intervalles prédéterminés.

7.  Procédé selon la revendication 6, dans lequel, dans chaque intervalle, la ou les topologies calculées sont stockées en mémoire et sont comparées à la ou aux topologies calculées stockées en mémoire de l'intervalle précédent.

8.  Procédé selon la revendication 6 ou 7, dans lequel, dans chaque intervalle, le message d'information de voisinage qui est reçu en provenance de chaque noeud respectif (5, 7, 9) est acheminé aux autres noeuds en provenance desquels des messages d'information de voisinage ont également été reçus.

9.  Procédé selon la revendication 8, dans lequel, en réponse à l'acheminement des messages d'information de voisinage aux noeuds respectifs (5, 7, 9), il est déterminé si une demande a été reçue ou non pour qu'un noeud identifié dans un premier des messages d'information de voisinage modifie son adresse ;
    dans lequel, dans le cas où une demande a été reçue, la demande est acheminée au noeud (5, 7, 9) ayant transmis le premier message d'information de voisinage.

10. Procédé selon la revendication 9, dans lequel, dans le cas où une demande a été reçue pour qu'un noeud identifié dans un premier des messages d'information de voisinage modifie son adresse, les étapes iv) et v) sont différées jusqu'à l'intervalle successif dans lequel aucune demande de ce type n'est reçue.

**11.** Procédé selon l'une quelconque des revendications 1 à 10, dans lequel chaque message d'information de voisinage comprend une liste des voisins les plus proches du noeud (5, 7, 9) envoyant le message ; et facultativement dans lequel :

chaque message d'information de voisinage inclut une liste de noeuds situés à deux bonds ou plus du noeud (5, 7, 9) envoyant le message d'information de voisinage.

**12.** Procédé selon la revendication 11, dans lequel chaque message d'information de voisinage spécifie une liste de tous les noeuds avec lesquels le noeud (5, 7, 9) envoyant le message est en mesure de communiquer au sein de son réseau, ainsi que le nombre de bonds entre ce noeud (5, 7, 9) et ces autres noeuds.

**13.** Procédé selon l'une quelconque des revendications précédentes, dans lequel le réseau externe utilise un réseau externe commun pour la connectivité de réseau et une fonctionnalité infonuagique pour la découverte de topologie et la détection du partitionnement de réseau.

**14.** Support de stockage lisible par ordinateur comprenant des instructions exécutables par ordinateur qui, lorsqu'elles sont exécutées par un ordinateur, amèneront l'ordinateur à mettre en oeuvre un procédé selon l'une quelconque des revendications précédentes.

**15.** Dispositif de communication (1600) exploitable de manière à agir en qualité de noeud (5) dans un premier réseau sans fil (1), le dispositif de communication (1600) comprenant :

un module d'interface d'installation de découverte de topologie (1613) exploitable de manière à :

établir une interface en vue de l'interfaçage avec une installation de réseau externe, l'installation de réseau externe comprenant un module de découverte de topologie ;
soumettre un message d'information de voisinage au module de découverte de topologie ;
dans lequel le message d'information de voisinage fournit une indication des autres noeuds dans le premier réseau avec lesquels le dispositif de communication (1600) est actuellement en mesure de communiquer, le module de découverte de topologie étant configuré de manière à calculer la topologie de réseaux auxquels appartiennent des noeuds respectifs, sur la base de messages d'information de voisinage reçus par le module de découverte de topologie en provenance de ces noeuds ;
recevoir des informations envoyées à partir de l'installation de réseau externe pour établir une voie de communication entre le premier dispositif de communication et un second dispositif de communication exploitable de manière à agir en tant qu'un noeud d'un second réseau sans fil (2, 3), le second dispositif de communication étant identifié par le module de découverte de topologie comme appartenant au second réseau sans fil, le second réseau sans fil (2, 3) étant identifié par le module de découverte de topologie comme étant un réseau sans fil différent du premier réseau sans fil du fait qu'il présente une topologie de réseau différente de celle du premier réseau sans fil (1).

Selected Gateway (with external interface)

Potential Gateway PGW (with external interface)

Node with no external net interface

Bearers of opportunity (e.g. external connectivity networks)

Cloud-hosted services

Ad-hoc network 1

Ad-hoc network 2

Ad-hoc network 3

5

7

9

Fig. 1

Fig. 2

Fig. 3

Ad-hoc network 1

Ad-hoc network 2

Fig. 4

Fig. 5

Fig. 6

Fig. 7

Fig. 8

Figure 9

Figure 10

| Probability[1]<br><br>Topology | Both nets formed simultaneously<br>$P(N_1, N_2) = P(N_1) * P(N_2)$<br>where $P(N_1) = P(N_2)$ | A net formed prior to<br>the other one<br>$P(N_1, N_2) = P(N_1)$ |
|---|---|---|
| 2-node networks | $2^{-10} \approx 0.99 * 10^{-3}$ | $3.1 * 10^{-2}$ |
| 3-node networks | $9 * 2^{-16} \approx 0.14 * 10^{-3}$ | $1.2 * 10^{-2}$ |
| 4-node networks | $0.4 * 2^{-22} \approx 2.5 * 10^{-6}$ | $0.16 * 10^{-2}$ |

# Figure 11

Fig. 12

**Algorithm:**

1.  Use (V(G), E(G), $\psi_G$) for an *Mid* received from "Topology Discovery"; Reset the PA (Partition Detected).
2.  Clear H triple (V(H), E(H), $\psi_H$) in order to make them as empty sets
3.  Take a node ($v_i$) from V(G) and add to V(H)
4.  Remove $v_i$ from V(G)
5.  If there are nodes in V(G),
6.     Then:
7.       Take another node ($v_j$) from V(G) and:
    If $\psi_G(b_i)$ = $v_i$ $v_j$ is held (i.e., $v_j$ connected to any other node in V(H))
8.         Then:
9.          i. Remove $v_j$ from V(G); add $v_j$ to V(H); Update (E(H), $\psi_H$)
10.         ii. Repeat from step 5 for all nodes in V(G) to be checked against nodes in V(H) for finding possible edges (connections);
    If all nodes are checked,
11.            Then there is no partition; check step16.
12.            Else continue step 14
13.       Else:
14.        Repeat step 5 only for those nodes in V(G) that are not yet checked against nodes in V(H);
    If all nodes are checked,
    Then check step 17.
15.    Else
16.      Check step 21.
17. If there are nodes in V(G),
18.    Then
19.      i. Nodes in V(G) are not connected to any node in V(H); H is a partition of original G with connected nodes; Set the PA; Store and compare (V(H), E(H), $\psi_H$) with its previous state. Signal [Mid, PGWs, (V(H), E(H), $\psi_H$)] to "GW Selection and Bridging" entity if there is a state change.
20.      ii. V(G) is not empty; Repeat the process from step 2 to find out further partitions.
21.    Else
22.      If PA=1, Then there is no further partition for this Mid
23.        Else there is no partition or a Merging Detected (MD); Set MD; Signal (Mid, MD) to "GW selection and Bridging".
24. End the process.

# Figure 13

1-hop Connectivity Matrix

|   | A | B | C | D | E | F | G | H |
|---|---|---|---|---|---|---|---|---|
| A | 0 | 1 | 0 | 1 | 0 | 0 | 0 | 0 |
| B | 1 | 0 | 0 | 0 | 0 | 0 | 0 | 0 |
| C | 0 | 0 | 0 | 1 | 1 | 0 | 0 | 0 |
| D | 1 | 0 | 1 | 0 | 1 | 1 | 0 | 0 |
| E | 0 | 0 | 0 | 1 | 0 | 1 | 0 | 0 |
| F | 0 | 0 | 0 | 1 | 1 | 0 | 1 | 1 |
| G | 0 | 0 | 0 | 0 | 0 | 1 | 0 | 1 |
| H | 0 | 0 | 0 | 0 | 0 | 1 | 1 | 0 |

{D, F}

2-hop Connectivity Matrix

|   | A | B | C | D | E | F | G | H |
|---|---|---|---|---|---|---|---|---|
| A | 0 | 0 | 1 | 0 | 1 | 1 | 0 | 0 |
| B | 0 | 0 | 0 | 1 | 0 | 0 | 0 | 0 |
| C | 1 | 0 | 0 | 0 | 0 | 1 | 0 | 0 |
| D | 0 | 1 | 0 | 0 | 0 | 0 | 1 | 1 |
| E | 1 | 0 | 0 | 0 | 0 | 0 | 1 | 1 |
| F | 1 | 0 | 1 | 0 | 0 | 0 | 0 | 0 |
| G | 0 | 0 | 0 | 1 | 1 | 0 | 0 | 0 |
| H | 0 | 0 | 0 | 1 | 1 | 0 | 0 | 0 |

{A, D, E}

Figure 14

Figure 15

1605

Working memory

Communications controller

Topology discovery
facility interface
module

1613

Gateway functions
module

1615

1607

Communications unit

1611

Processor

1601

1609

Mass
storage
unit

1603

1600

Fig. 16

Fig. 17

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6304556 B1
- EP 2552151 A1

**Non-patent literature cited in the description**

- **M. ANTIKAINEN.** Reliable Data Delivery for Publish/Subscribe Networks. *TKK T-110.5190 Seminar on Internetworking,* May 2010